# EUROPÄISCHE PATENTSCHRIFT

(11) **EP 1 167 808 B1**
(45) Veröffentlichungstag und Bekanntmachung des Hinweises auf die Patenterteilung: **18.01.2006**
(21) Anmeldenummer: 01114203.1
(22) Anmeldetag: 12.06.2001
(51) Int. Cl.: F16F 7/08, F16F 13/00

(54) **Elastomerlager**
Elastomeric mounting
Support en élastomère

(30) Priorität: 22.06.2000 DE 10029564
(43) Veröffentlichungstag der Anmeldung: 02.01.2002
(73) Patentinhaber: ContiTech Vibration Control GmbH, 30165 Hannover (DE)
(72) Erfinder: Härtel, Volker Dr., 82110 Germering (DE); Tschimmel, Jürgen, 30419 Hannover (DE)

(56) Entgegenhaltungen:
- FR-A- 1 260 067
- US-A- 4 624 435
- US-A- 4 687 171
- US-A- 5 681 032

## Beschreibung

Die Erfindung betrifft ein Elastomerlager zur Dämpfung oder Entkopplung von Schwingungen zwischen benachbarten Bauteilen, mit einem aus einem elastomeren Werkstoff, vorzugsweise aus Gummi gebildeten Federkörper, der an mindestens einer seiner zwei Stirnflächen mit einem vorzugsweise metallischen Anschlußteil zur Befestigung verbunden ist.

Man verwendet solche Federelemente, die verhältnismäßig einfach aufgebaut sein können, zur schwingungsisolierten Anbringung von Bauteilen oder Aggregaten, um diese vor schädlichen Schwingungen oder Schocks zu schützen oder um zu verhindern, daß Schwingungen, die von diesen ausgehen, auf andere Bauteile übertragen werden. Die Befestigung solcher Federelemente erfolgt durchweg mittels Schraubverbindungen, wobei die Federelement-Anschlußteile entweder in sie eingeformte oder in Form von Muttern an ihnen angebrachte Innengewinde aufweisen oder Stehbolzen mit Außengewinde tragen.

Bekannt sind hydraulisch gedämpfte Lager, beispielsweise aus der DE 34 41 592 C2, bei denen neben der Schwingungsdämpfung durch Gummielemente eine Hydraulikflüssigkeit zusätzlich dämpft, indem bei Lagerbelastung die Flüssigkeit besondere Drosselquerschnitte durchströmt. Durch diese Ausbildung kann man das Lager oft auf verschiedene Frequenzbereiche auslegen.

Die US-A-4 624 435 offenbart ein Elastomer-Dämpferlager mit einer zusätzlichen parallel geschalteten Dämpfungseinrichtung, die elektromagnetisch betätigbar und elektronisch regelbar ist. Die zusätzliche Dämpfung erfolgt hier im wesentlichen über geregelte Induktionskräfte oder über durch Wirbelstrom induzierte Kräfte, die in benachbarten und relativ gegeneinander beweglichen Dämpferelementen, wie z.B. Magnet und Spule, erzeugt werden. Eine besondere Ausführung (Fig. 10) zeigt eine zusätzliche Reibpaarung zwischen solchen Dämpferelementen, wobei die die Reibkraft bestimmende Normalkraft senkrecht zur Reibfläche elektromagnetisch erzeugt wird.

Ein Nachteil all dieser Lagerungen besteht darin, dass eine Schaltbarkeit bzw. eine Einstell- oder Regelbarkeit im Hinblick auf die Dämpfungsrate oder -kraft und auf verschiedene Schwingungsfrequenzen nicht oder nur mit sehr hohem Aufwand erreicht werden kann.

Für die Erfindung bestand daher die Aufgabe, die bisher bekannten Nachteile zu vermeiden und ein einstell- oder regelbares Elastomerlager bereitzustellen, welches einfach und kostengünstig herzustellen und doch präzise und mit einfachen Mitteln zu regeln ist.

Gelöst wird diese Aufgabe durch die Merkmale des Hauptanspruchs. Weitere vorteilhafte Ausbildungen sind in den Unteransprüchen vorhanden.

Hierbei weist das Elastomerlager einen parallel geschalteten elektrisch und / oder elektronisch regelbaren Reibungsdämpfer auf. Vorteilhafterweise ist der Federkörper hohlzylinderförmig ausgebildet und weist an beiden seiner Stirnflächen scheibenförmige und den Hohlraum im Wesentlichen schließende metallische Anschlußteile auf. Der regelbare Reibungsdämpfer ist dabei im Inneren des Hohlraumes angeordnet und mit den beiden Anschlußteilen verbunden.

Dabei besteht der regelbare Reibungsdämpfer aus mindestens zwei jeweils an einem Anschlußteil befestigten und in den Hohlraum hineinragenden Dämpferelementen besteht, die über einen Teilbereich benachbart und in Kraftübertragungsrichtung verschieblich aneinanderliegen. Durch Anlegen elektrischer Energie zwischen den Dämpferelementen ist dann eine Reibpaarung aktivierbar.

Die der Aktivierung der Reibpaarung besteht dabei darin, daß mindestens eines der jeweils an einem Anschlußteil befestigten und in den Hohlraum hineinragenden Dämpferelemente mindestens in seinem dem anderen Dämpferelement benachbarten Teilbereich eine piezoelektrisch wirksame Oberfläche aufweist, die sich durch Anlegen elektrischer Energie in Richtung auf die Oberfläche des anderen Dämpferelementes verformt. Die Oberflächen treten dann in Reibkontakt, wobei die Stärke der Reibkraft mit dem Maß der piezoelektrischen Verformung und damit über die Energiezufuhr leicht regelbar ist. Insbesondere bei einer solchen Ausbildung ist es vorteilhaft, die Dämpferelemente als ineinander verschiebliche Zylinder und Hohlzylinder auszubilden wobei z. Beisp. die Teilbereiche des als Zylinder ausgebildeten einen Dämpfungselementes, die in das als Hohlzylinder ausgebildete andere Dämpfungselement eintauchen, eine piezoelektrisch wirksame Oberfläche aufweisen. "Verdickt" sich dann nach Energiezufuhr der entsprechende Zylinderbereich, wird die Reibpaarung wirksam.

In einer weiteren vorteilhaften Ausbildung können die regelbaren Dämpferelemente auch aus elastomerem Material bestehen, wobei mindestens eines in seinem dem anderen Dämpferelement benachbarten Teilbereich piezokeramische Bauteile oder eingelagerte Piezokristalle aufweist, die die Oberfläche soweit verformen, das eine Reibpaarung auftritt.

Eine weitere vorteilhafte Ausbildung besteht darin, daß die Dämpferelemente als einander benachbarte Platten ausgebildet' sind und ggf. zusätzlich von Führungseinrichtungen während ihrer Relativbewegung in der Reibpaarung abgestützt werden, sodass die auf die Oberflächen wirkenden Normalkräfte gut aufgefangen werden können.

Anhand eines Ausführungsbeispieles soll die Erfindung näher erläutert werden.

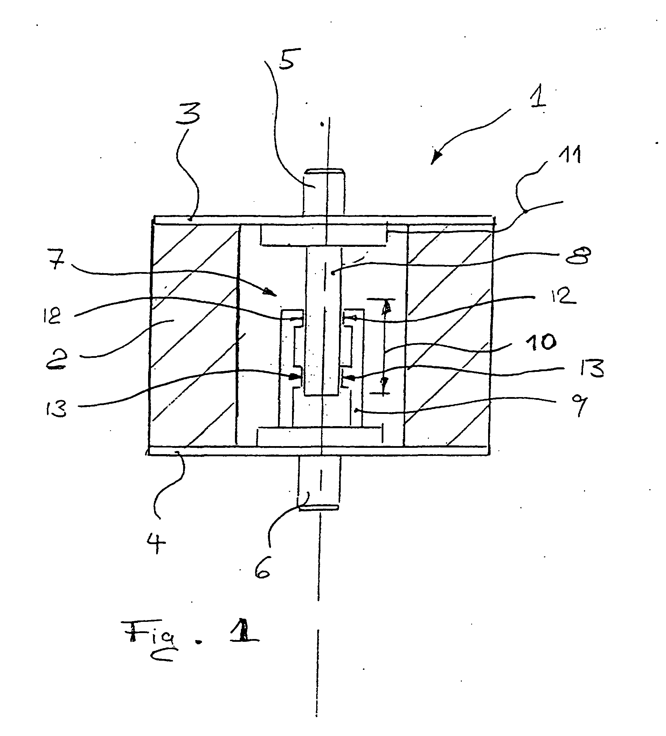

Die Fig. 1 zeigt ein Elastomerlager 1, mit einem aus Gummi gebildeten hohlzylinderförmigen Federkörper 2, der an beiden Stirnflächen mit einer den Hohlraum im Wesentlichen schließenden metallischen Scheibe 3 und 4 als Anschlußteil verbunden ist.

Die Befestigung des Elastomerlager erfolgt mittels Schraubverbindungen, wobei die Anschlußteile Stehbolzen 5 und 6 mit Außengewinde tragen.

Der regelbare Reibungsdämpfer 7 besteht aus zwei jeweils an einem Anschlußteil befestigten und in den Hohlraum hineinragenden Dämpferelementen 8 und 9, die als ineinander verschiebliche Zylinder und Hohlzylinder ausgebildet sind.

Ein Teilbereich 10 des als Zylinder ausgebildeten Dämpfungselementes 8, das in das als Hohlzylinder ausgebildete Dämpfungselement 9 verschieblich eintauchen, weist eine piezoelektrisch wirksame Oberfläche auf. "Verdickt" sich dann nach Energiezufuhr über die Zuleitung 11 der entsprechende Zylinderbereich, wird die Reibpaarung zwischen den Dämpferelementen 8 und 9 an den Reibflächen 12 und 13 wirksam.

## Patentansprüche

1. Elastomerlager (1) zur Dämpfung oder Entkopplung von Schwingungen zwischen benachbarten Bauteilen, mit einem aus einem elastomeren Werkstoff, vorzugsweise aus Gummi gebildeten Federkörper (2), der an mindestens einer seiner zwei Stirnflächen mit einem vorzugsweise metallischen Anschlußteil (3,4) zur Befestigung verbunden ist, wobei
das Elastomerlager (1) einen parallel geschalteten elektrisch und / oder elektronisch regelbaren Reibungsdämpfer (7) aufweist, und wobei
der Federkörper (2) hohlzylinderförmig ausgebildet ist, an beiden seiner Stirnflächen scheibenförmige und den Hohlraum im Wesentlichen schließende metallische Anschlußteile (3,4) aufweist, und
wobei der regelbare Reibungsdämpfer (7) aus mindestens zwei jeweils an einem Anschlußteil (3,4) befestigten und in den Hohlraum hineinragenden Dämpferelementen (8,9) besteht, die über einen Teilbereich benachbart und in Kraftübertragungsrichtung verschieblich aneinanderliegen, wobei durch Anlegen elektrischer Energie zwischen den Dämpferelementen (8,9) eine Reibpaarung aktivierbar ist,
**dadurch gekennzeichnet, daß** mindestens eines der jeweils an einem Anschlußteil (3,4) befestigten und in den Hohlraum hineinragenden Dämpferelemente (8,9) mindestens in seinem dem anderen Dämpferelement (8.9) benachbarten Teilbereich eine piezoelektrisch wirksame Oberfläche (10) aufweist, die sich durch Anlegen elektrischer Energie in Richtung auf die Oberfläche des anderen Dämpferelementes (8,9) verformt und die Reibpaarung aktiviert.

2. Elastomerlager nach Anspruch 1, **dadurch gekennzeichnet, daß** mindestens eines der jeweils an einem Anschlußteil (3,4) befestigten und in den Hohlraum hineinragenden Dämpferelemente (8,9) aus elastomerem Material besteht und mindestens eines in seinem dem anderen Dämpferelement (8,9) benachbarten Teilbereich piezokeramische Bauteile oder eingelagerte Piezokristalle aufweist, die die Oberfläche soweit verformen, das eine Reibpaarung auftritt

3. Elastomerlager nach Anspruch 2, **dadurch gekennzeichnet, daß** die Dämpferelemente (8.9) von Führungseinrichtungen während ihrer Relativbewegung in der Reibpaarung abgestützt werden.

4. Elastomerlager nach einem der Ansprüch 2 oder 3, **dadurch gekennzeichnet, daß** die Dämpferelemente (8.9) als ineinander verschiebliche Zylinder und Hohlzylinder ausgebildet sind.

5. Elastomerlager nach einem der Ansprüch 2 oder 3, **dadurch gekennzeichnet, daß** die Dämpferelemente (8,9) als einander benachbarte Platten ausgebildet sind.

## Claims

1. Elastomeric mounting (1) for damping or isolating vibrations between adjacent component parts, with a spring body (2), which is formed from an elastomeric material, preferably from rubber, and is connected at at least one of its two end faces to a preferably metallic connection part (3, 4) for fastening,
the elastomeric mounting (1) having an electrically and/or electronically controllable friction damper (7) connected in parallel, and
the spring body (2) being formed in a hollow-cylindrical manner, having on both its end faces disc-shaped metallic connection parts (3, 4), which substantially close the hollow chamber, and
the controllable friction damper (7) comprising at least two damper elements (8, 9), which are respectively connected to a connection part (3, 4), protrude into the hollow chamber and lie one against the other in such a way that they are adjacent over a sub-region and displaceable in the direction of force transmission, a friction pairing being activatable by applying electrical energy between the damper elements (8, 9),
**characterized in that** at least one of the damper elements (8, 9) respectively fastened to a connection part (3, 4) and protruding into the hollow chamber has at least in its sub-region adjacent to the other damper element (8, 9) a surface (10) with a piezoelectric effect, which, when electrical energy is applied, is deformed in the direction of the surface of the other damper element (8, 9) and activates the friction pairing.

2. Elastomeric mounting according to Claim 1,
**characterized in that** at least one of the damper elements (8, 9) respectively fastened to a connection part (3, 4) and protruding into the hollow chamber consists of elastomeric material and at least one has in its sub-region adjacent to the other damper element (8, 9) piezoceramic component parts or incorporated piezoelectric crystals, which deform the surface to the extent that a friction pairing occurs.

3. Elastomeric mounting according to Claim 2,
**characterized in that** the damper elements (8, 9) are supported by guiding devices during their relative movement in the friction pairing.

4. Elastomeric mounting according to either of Claims 2 and 3, **characterized in that** the damper elements (8, 9) are formed as a cylinder and a hollow cylinder which can be displaced one inside the other.

5. Elastomeric mounting according to either of Claims 2 and 3, **characterized in that** the damper elements (8, 9) are formed as mutually adjacent plates.

## Revendications

1. Coussinet élastomère (1) qui amortit ou découple les oscillations entre des éléments voisins, qui présente un corps élastique (2) en matériau élastomère et de préférence en caoutchouc, dont au moins l'une des deux surfaces frontales est reliée à une pièce de raccordement (3, 4) de préférence métallique en vue de sa fixation, le coussinet élastomère (1) présentant un amortisseur (7) à frottement monté en parallèle et régulable électriquement et/ou électroniquement, le corps élastique (2) étant réalisé en forme de cylindre creux qui présente sur ses deux surfaces frontales des pièces métalliques de raccordement (3, 4) en forme de disque qui ferment essentiellement la cavité, l'amortisseur régulable (7) à frottement étant constitué d'au moins deux éléments d'amortisseur (8, 9) qui sont fixés à une pièce de raccordement (3, 4) respective, qui pénètrent dans la cavité, qui sont voisins l'un de l'autre sur une zone partielle et sont placés l'un contre l'autre de manière à pouvoir coulisser dans la direction de transmission des forces, l'application d'une énergie électrique entre les éléments d'amortisseur (8, 9) permettant d'activer une paire à frottement, **caractérisé en ce qu'**au moins un des éléments d'amortisseur (8, 9) fixés à une pièce de raccordement (3, 4) et qui pénètrent dans la cavité présente au moins dans sa partie voisine de l'autre élément d'amortisseur (8, 9) une surface (10) piézoélectriquement active qui se déforme en direction de la surface de l'autre élément d'amortisseur (8, 9) quand on y applique une énergie électrique et qui active paire à frottement.

2. Coussinet élastomère selon la revendication 1,
**caractérisé en ce qu'**au moins l'un des éléments d'amortisseur (8, 9) fixés à une pièce de raccordement (3, 4) et qui pénètrent dans la cavité est constitué d'un matériau élastomère et présente au moins un élément piézocéramique ou un piézocristal intégré, agencé dans sa partie voisine de l'autre élément d'amortisseur (8, 9) et qui déforme la surface dans une mesure telle qu'une paire à frottement est créée.

3. Coussinet élastomère selon la revendication 2,
**caractérisé en ce que** les éléments d'amortisseur (8, 9) sont portés par des dispositifs de guidage pendant leur déplacement relatif dans la paire à frottement.

4. Coussinet élastomère selon l'une des revendications 2 ou 3, **caractérisé en ce que** les éléments d'amortisseur (8, 9) sont configurés respectivement comme cylindre et cylindre creux aptes à coulisser l'un dans l'autre.

5. Coussinet élastomère selon l'une des revendications 2 ou 3, **caractérisé en ce que** les éléments d'amortisseur (8, 9) sont configurés comme plaques voisines l'une de l'autre.
